(19) Europäisches Patentamt
European Patent Office
Office européen des brevets

(11) **EP 3 312 627 A1**

(12) **EUROPÄISCHE PATENTANMELDUNG**

(43) Veröffentlichungstag:
**25.04.2018 Patentblatt 2018/17**

(51) Int Cl.:
***G01S 7/40*** *(2006.01)*     ***H01P 1/28*** *(2006.01)*
***H01P 9/02*** *(2006.01)*     *G01S 13/93* *(2006.01)*

(21) Anmeldenummer: **16195243.7**

(22) Anmeldetag: **24.10.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Magna Steyr Fahrzeugtechnik AG & Co KG**
**8041 Graz (AT)**

(72) Erfinder: **Magosi, Zoltan-Ferenc**
**8041 Graz (AT)**

(74) Vertreter: **Zangger, Bernd**
**Magna International Europe GmbH**
**Patentabteilung**
**Liebenauer Hauptstraße 317**
**8041 Graz (AT)**

(54) **RADARSENSORSTIMULATOR**

(57) Ein Radarsensorstimulator, zur Modulierung eines Radarsignals (R) in einem Fahrzeugprüfstand, umfassend eine Empfangsantenne (Rx) zum Empfang des Radarsignals (R), einen Modulator (M) zur Veränderung des Radarsignals (R) und eine Sendeantenne (Tx) zum Aussenden des modulierten Radarsignals (R), wobei der Modulator (M) zumindest eine Zeitverzögerungseinheit ($Z_1$) umfasst, wobei die Zeitverzögerungseinheit ($Z_1$) zumindest einen Hohlwellenleiter (1) umfasst, so dass mittels des Hohlwellenleiters (1) dem Radarsignal (R) in der Zeitverzögerungseinheit ($Z_1$) eine vordefinierte Zeitverzögerung ($t_1$) aufgeprägt werden kann.

**Fig. 1**

**Beschreibung**

**Gebiet der Erfindung**

Die vorliegende Erfindung betrifft einen Radarsensorstimulator, zur Modulierung eines Radarsignals in einem Fahrzeugprüfstand.

**Stand der Technik**

Ein derartiger Radarsensorstimulator kann in erster Linie genutzt werden um einen Radarsensor eines Kraftfahrzeuges in einem Prüfstand oder einem Laboraufbau zu stimulieren.

Im Zuge der Entwicklung von zuverlässigen Systemen, die ein autonomes Fahren von Kraftfahrzeugen, also insbesondere automatisches Lenken und/oder Beschleunigen bzw. Abbremsen ermöglichen, werden - neben kamarabasierten Systemen - auch Fahrzeuge entwickelt und getestet, die Radarsignale ausstrahlen und die von der Umgebung reflektierten bzw. modulierten Radarsignale mittels Radarsensoren wieder erfassen, um ihre Fahrzeugumgebung zu bestimmen.

Derartige Tests von autonomen Fahrzeugen sollen zur Verringerung der damit verbundenen Gefahren möglichst wenig auf Straßen durchgeführt werden, sondern möglichst in Prüfständen bzw. Laboraufbauten.

Hierfür steht entweder ein Gesamtfahrzeug oder auch nur Teile des zu prüfenden Fahrzeuges auf dem Prüfstand. Die Radarsensoren können oft Objekte in Entfernungen von mehreren hundert Metern erfassen. Eine Nachbildung einer natürlichen Umgebung mit Hindernissen benötigt daher viel Platz, ist teuer und aufwändig.

**Zusammenfassung der Erfindung**

Es ist eine Aufgabe der Erfindung, einen Radarsensorstimulator anzugeben, der es ermöglicht Fahrzeuge oder Fahrzeugteile mit Radarsensoren in einem Fahrzeugprüfstand zu testen, wobei der Radarsensorstimulator und somit der Prüfstand geringen Platzbedarf hat und kostengünstig herstellbar ist.

Die Lösung der Aufgabe erfolgt durch einen Radarsensorstimulator, zur Modulierung eines Radarsignals in einem Fahrzeugprüfstand, umfassend eine Empfangsantenne zum Empfang eines Radarsignals, einen Modulator zur Veränderung des Radarsignals und eine Sendeantenne zum Aussenden des modulierten Radarsignals, wobei der Modulator zumindest eine Zeitverzögerungseinheit umfasst, wobei die Zeitverzögerungseinheit zumindest einen Hohlwellenleiter umfasst, so dass mittels des Hohlwellenleiters dem Radarsignal in der Zeitverzögerungseinheit eine vordefinierte Zeitverzögerung aufgeprägt werden kann.

Erfindungsgemäß wird zumindest eine, vorzugsweise viele, Zeitverzögerungseinheit mit einer vordefinierten Zeitverzögerung für ein beispielsweise von einem Fahrzeug ausgestrahltes Radarsignal genutzt, um die erforderliche Strecke des Radarsignals zu verkürzen bzw. einem Radarsensor, der beispielsweise am selben Fahrzeug angebracht sein kann, eine längere Strecke des zurückkommenden Radarsignals zu simulieren. Ein Hindernis dessen Radarsignal-Modulation um die vordefinierte Zeitverzögerung später beim Radarsensor eintrifft, wird, beispielsweise von einem Steuergerät des Fahrzeuges, als entsprechend weiter vom Fahrzeug entfernt liegend interpretiert. Die Zeitverzögerung kann in einem erfindungsgemäßen Radarsensorstimulator einfach und kostengünstig am analogen Radarsignal erfolgen, durch Verwendung eines oder mehrerer Hohlwellenleiter.

Vorzugsweise umfasst der Modulator mehrere Zeitverzögerungseinheiten, bevorzugt mindestens 10 oder mindestens 50, besonders bevorzugt mindestens 100 Zeitverzögerungseinheiten, wobei die Zeitverzögerungseinheiten jeweils zumindest einen Hohlwellenleiter umfassen, so dass mittels der Hohlwellenleiter dem Radarsignal in den Zeitverzögerungseinheiten jeweils eine, bevorzugt jeweils die selbe, vordefinierte Zeitverzögerung aufgeprägt werden kann. Auf diese Weise kann mittels einfacher, beispielsweise jeweils gleich aufgebauter Zeitverzögerungseinheiten, eine lange Distanz des Radarsignals simuliert werden. Dazu sind die Zeitverzögerungseinheiten bevorzugt in Serie zueinander geschaltet. Eine derartige Serienschaltung von Zeitverzögerungseinheiten kann in einem Zeitverzögerungsmodul zusammengefasst sein.

Es ist auch möglich dass Zeitverzögerungseinheiten mehrfach genutzt werden, so dass ein Ausgangssignal einer Zeitverzögerungseinheit im weiteren Verlauf der selben Zeitverzögerungseinheit wieder zugeführt wird.

Bevorzugt ist der Hohlwellenleiter in der Zeitverzögerungseinheit bzw. in allen Zeitverzögerungseinheiten spulenförmig angeordnet.

Vorzugsweise umfasst der Radarsensorstimulator einen ersten Mischer zwischen der Empfangsantenne und der Zeitverzögerungseinheit bzw. den Zeitverzögerungseinheiten, wobei das Radarsignal durch den ersten Mischer auf eine niedrigere Frequenz transformierbar ist. Das Radarsignal kann an der Empfangsantenne beispielsweise ein hochfrequentes Signal sein, das bevorzugt über 50 GHz liegen kann, insbesondere bei etwa 77 GHz. Das hochfrequente Signal kann durch den ersten Mischer auf eine niedrige Zwischenfrequenz umgewandelt werden, bevor es an die Zeitverzögerungseinheit weiter geleitet wird.

Bevorzugt umfasst der Radarsensorstimulator einen zweiten Mischer zwischen der Zeitverzögerungseinheit bzw. den Zeitverzögerungseinheiten und der Sendeantenne, wobei das Radarsignal durch den zweiten Mischer auf eine höhere Frequenz transformierbar ist. Insbesondere kann so die durch den ersten Mischer nach unten transformierte Zwischenfrequenz vor der Abstrahlung des modulierten Signals durch die Sendeantenne wieder auf die hohe Eingangsfrequenz umgesetzt werden.

Der Radarsensorstimulator umfasst vorzugsweise eine Zirkulationseinheit, wobei die Zirkulationseinheit einen Eingang für das Radarsignal vom ersten Mischer aufweist, einen Ausgang für das Radarsignal zum zweiten Mischer aufweist und einen Eingang und einen Ausgang zur Zeitverzögerungseinheit aufweist.

Bevorzugt umfasst der Radarsensorstimulator zumindest einen ersten Reflektor-Hohlwellenleiter, wobei das Radarsignal nach der Zeitverzögerungseinheit, oder den Zeitverzögerungseinheiten, in den ersten Reflektor-Hohlwellenleiter geleitet werden kann, wobei der erste Reflektor-Hohlwellenleiter zumindest einen, im Hohlwellenleiter des ersten Reflektor-Hohlwellenleiters beweglichen, ersten Reflektor für das Radarsignal umfasst. Der erste Reflektor dient somit zur Simulation eines Gegenstandes der das Radarsignal moduliert, beispielsweise eines Hindernisses und ist beweglich in einem Hohlwellenleiter angeordnet, so dass beispielsweise ein Näherkommen oder ein Sich-Entfernen des Hindernisses abgebildet werden kann.

Bevorzugt umfasst der Radarsensorstimulator zumindest einen zweiten Reflektor-Hohlwellenleiter, wobei das Radarsignal nach der Zeitverzögerungseinheit oder den Zeitverzögerungseinheiten, insbesondere alternativ zum ersten Reflektor-Hohlwellenleiter, in den zweiten Reflektor-Hohlwellenleiter geleitet werden kann, wobei der zweite Reflektor-Hohlwellenleiter zumindest einen, im Hohlwellenleiter des zweiten Reflektor-Hohlwellenleiters beweglichen, zweiten Reflektor für das Radarsignal umfasst. Der Hohlwellenleiter des zweiten Reflektor-Hohlwellenleiters ist bevorzugt gleich aufgebaut wie der Hohlwellenleiter des ersten Reflektor-Hohlwellenleiters, so dass beide Reflektor-Hohlwellenleiter eine selbe Zeitverzögerung bzw. Distanz für das Radarsignal abbilden können. Insbesondere kann der zweite Reflektor-Hohlwellenleiter baugleich dem ersten Reflektor-Hohlwellenleiter sein.

Besonders bevorzugt umfasst der Radarsensorstimulator der Zeitverzögerungseinheit nachgeschaltet eine Schalteinheit, wobei das Radarsignal durch die Schalteinheit wahlweise zum ersten Reflektor-Hohlwellenleiter oder zum zweiten Reflektor-Hohlwellenleiter geleitet werden kann.

Vorzugsweise umfasst der Radarsensorstimulator eine Steuerung.

Die Steuerung kann bevorzugt dazu eingerichtet sein, in einem Normalbetrieb, bei Erreichen einer Endlage des ersten und/oder des zweiten Reflektors - also an einem Ende der Bewegungsbahn des jeweiligen Reflektors - die Zeitverzögerungseinheit bzw. eine der Zeitverzögerungseinheiten zu deaktivieren oder die Zeitverzögerungseinheit bzw. eine der Zeitverzögerungseinheiten zu aktivieren.

Bevorzugt ist die Steuerung dazu eingerichtet, im Normalbetrieb, den ersten Reflektor und den zweite Reflektor gleichzeitig in den einander gegenläufigen Richtungen zu bewegen, also den zweiten Reflektor weiter zu entfernen wenn der erste Reflektor angenähert wird und umgekehrt.

Hierdurch kann insbesondere erreicht werden, dass mittels Umschalten zwischen erstem und zweitem Reflektor und Aktivieren/Deaktivieren jeweils einer Zeitverzögerungseinheit beim Umschalten zwischen den Reflektor-Hohlwellenleitern ein kontinuierliches Annähern oder Sich-Entfernen eines Objektes über eine lange Distanz simuliert werden kann. Beispielsweise kann, nachdem der erste Reflektor sein nahe liegendes Ende erreicht hat, eine Zeitverzögerungseinheit abgeschaltet werden und zugleich mittels Schalteinheit auf den zweiten Reflektor-Hohlwellenleiter umgeschaltet werden, dessen zweiter Reflektor in dieser Situation gerade an seinem entfernten Ende angelangt ist und von dort ausgehend weiter angenähert werden kann.

In umgekehrter Richtung kann auf analoge Weise, bei Aktivieren einer Zeitverzögerungseinheit während dem Umschalten auf den jeweils anderen Reflektor-Hohlwellenleiter, ein Sich-Entfernen eines Objektes auf längere Distanz abgebildet werden.

**Kurzbeschreibung der Zeichnungen**

Die Erfindung wird im Folgenden beispielhaft unter Bezugnahme auf die Zeichnungen beschrieben.

Fig. 1    ist eine schematische Darstellung eines erfindungsgemäßen Radarsensorstimulators.

Fig. 2    ist eine Detaildarstellung des Zeitverzögerungsmoduls aus Fig. 1.

Fig. 3    ist eine schematische Darstellung einer beispielhaften Verwendung eines erfindungsgemäßen Radarsensorstimulators gemäß Fig. 1.

Fig. 4    ist eine schematische Darstellung der Fahrzeugpositionen für das Beispiel gemäß Fig. 3.

## Detaillierte Beschreibung der Erfindung

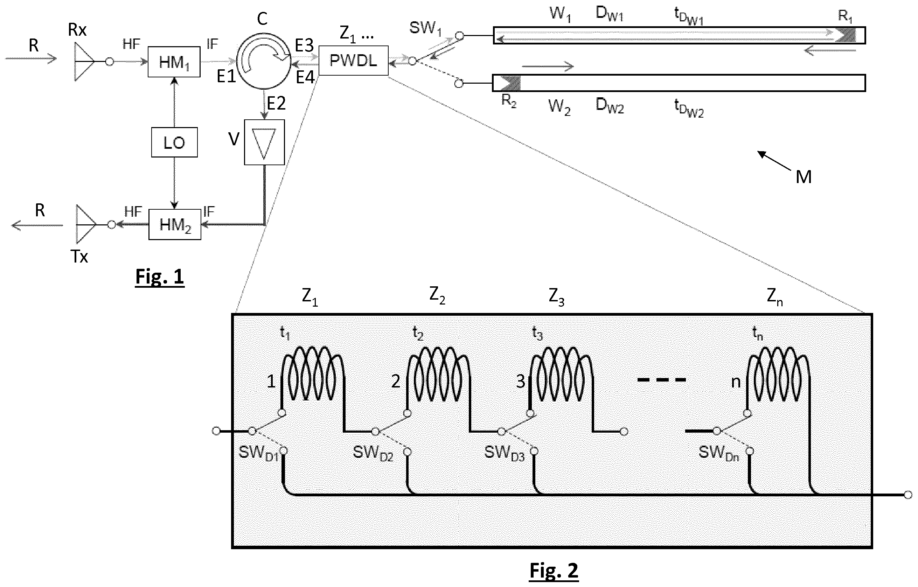

In den Fig. 1 und 2 ist ein erfindungsgemäßer Radarsensorstimulator dargestellt, geeignet zur Modulierung eines Radarsignals R in einem Fahrzeugprüfstand. Der Radarsimulator umfasst eine Empfangsantenne Rx zum Empfang des Radarsignals R, das von einem Fahrzeug ausgesendet sein kann, einen Modulator M zur Veränderung des Radarsignals R und eine Sendeantenne Tx zum Aussenden des modulierten Radarsignals R.

Der Modulator M umfasst ein Zeitverzögerungsmodul PWDL, das - wie in Fig. 2 ersichtlich - mehrere Zeitverzögerungseinheiten $Z_1$, $Z_2$, $Z_3$, ..., $Z_n$ umfasst, beispielsweise 200 Zeitverzögerungseinheiten $Z_1$, $Z_2$, $Z_3$, ..., $Z_n$, die jeweils einen Hohlwellenleiter 1, 2, 3, ..., n umfassen, so dass mittels der Hohlwellenleiter 1, 2, 3, ..., n dem Radarsignal R in den Zeitverzögerungseinheiten $Z_1$, $Z_2$, $Z_3$, ..., $Z_n$ jeweils die selbe vordefinierte Zeitverzögerung $t_1$, $t_2$, $t_3$, ..., $t_n$, beispielsweise jeweils 14 ns, aufgeprägt werden kann, die umgerechnet über die Lichtgeschwindigkeit des Radarsignals jeweils einer Distanz von 2 m entspricht.

Die Hohlwellenleiter 1, 2, ..., n sind in den Zeitverzögerungseinheiten $Z_1$, $Z_2$, $Z_3$, ..., $Z_n$ spulenförmig angeordnet.

Der Radarsensorstimulator umfasst ferner einen ersten Mischer $HM_1$ zwischen der Empfangsantenne Rx und dem Zeitverzögerungsmodul PWDL, wobei das Radarsignal R durch den ersten Mischer $HM_1$ von einer höheren Frequenz HF auf eine niedrigere Zwischen-Frequenz IF transformierbar ist.

Durch einen zweiten Mischer $HM_2$ zwischen dem Zeitverzögerungsmodul PWDL und der Sendeantenne Tx kann das Radarsignal R von der niedrigeren Zwischen-Frequenz IF nach der Modulierung wieder auf die höhere Frequenz HF transformiert werden.

Der Radarsensorstimulator umfasst ferner eine Zirkulationseinheit C, wobei die Zirkulationseinheit C einen Eingang $E_1$ für das Radarsignal R vom ersten Mischer $HM_1$ aufweist, einen Ausgang E2 für das Radarsignal R zum zweiten Mischer $HM_2$ aufweist und einen Ausgang E3 und einen Eingang E4 zur Zeitverzögerungseinheit $Z_1$ bzw. zum gesamten Zeitverzögerungsmodul PWDL aufweist.

Zusätzlich zu den Zeitverzögerungseinheiten $Z_1$, $Z_2$, $Z_3$, ..., $Z_n$ mit fixen Zeitverzögerungen für das Radarsignal R, weist der Radarsensorstimulator einen ersten und einen zweiten Reflektor-Hohlwellenleiter $W_1$, $W_2$ auf, wobei das Radarsignal R nach dem Zeitverzögerungsmodul PWDL über einen Schalter $SW_1$ wahlweise in den ersten Reflektor-Hohlwellenleiter $W_1$ oder in den zweiten Reflektor-Hohlwellenleiter $W_2$ geleitet werden kann. Der erste und der zweite Reflektor-Hohlwellenleiter $W_1$ und $W_2$ weisen jeweils einen im Hohlwellenleiter horizontal beweglichen ersten bzw. zweiten Reflektor $R_1$, $R_2$ auf, um das Radarsignal R zu reflektieren.

Der erste Reflektor $R_1$ und der zweite Reflektor $R_2$ werden in den Reflektor-Hohlwellenleitern $W_1$, $W_2$ in einander gegenläufigen Richtungen bewegt, so dass jeweils der erste Reflektor $R_1$ am Ende links in Fig. 1 ankommt, wenn der zweite Reflektor $R_2$ am Ende rechts in Fig. 1 ankommt und umgekehrt.

Bei Erreichen einer Endlage des ersten und/oder des zweiten Reflektors $R_1$, $R_2$ kann eine der Zeitverzögerungseinheiten $Z_1$, $Z_2$, $Z_3$, ..., $Z_n$ aktiviert oder deaktiviert werden.

Ein erfindungsgemäßer Radarsensorstimulators kann demnach beispielsweise folgendermaßen betrieben werden: Die Antenne Rx empfängt ein durch einen Radarsensor bzw. durch einen nahe am Radarsensor angeordneten Emitter ausgestrahltes elektromagnetisches Signal R. Der harmonische Mischer $HM_1$ setzt das von der Antenne Rx kommende hochfrequente HF Signal von 77 GHz auf eine feste Zwischenfrequenz IF um. Der Zirkulator C leitet dieses niederfrequente Signal zum Eingang des Zeitverzögerungsmoduls PWDL (Programmable Waveguide Delay Line Modul) weiter, welches aus spulenförmig angeordneten Hohlwellenleitern 1, 2, ..., n gebildet wird. Diese Verzögerungsleitungen 1, 2,..., n haben alle die gleichen Abmessungen und haben dementsprechend die gleichen Verzögerungen $t_1$, $t_2$, ..., $t_n$ (n x 14 ns). Man kann eine einzelne Verzögerungseinheit $Z_1$ verwenden oder mehrere in Serie geschaltete Verzögerungseinheiten $Z_1$, $Z_2$, $Z_3$, ..., $Z_n$. Dies erfolgt durch Aktivieren und Deaktivieren einzelner Zeitverzögerungseinheiten mittels Schalteinheiten $SW_{D1}$ bis $SW_{Dn}$. Damit gibt es die Möglichkeit, die gesamte Signalverzögerung in diskreten Schritten zu verändern. In weiterer Folge wird das Signal über die Schalteinheit $SW_1$ in den Wellenhohlleiter $W_1$ oder $W_2$ geleitet. Beide Wellenhohlleiter besitzen bewegliche Reflektoren $R_1$ und $R_2$, die sich immer gegengleich bewegen. Das in den Wellenhohlleiter eingeleitete Signal wird je nach Position des Reflektors verzögert über $SW_1$ in das PWDL-Modul reflektiert. In diesem Modul wird das Signal entsprechend der Simulation weiter verzögert und an den Zirkulator C weitergeleitet. Das Signal tritt in den Zirkulator C über den Eingang E4 ein und tritt über den Ausgang E2 in Richtung zu einem Verstärker V aus. Danach wird das verstärkte und entsprechend der Simulation verzögerte niederfrequente Signal IF mit dem Mischer $HM_2$ wieder in den hochfrequenten Bereich HF (77 GHz) zurückgeführt. Nun wird das Signal R über die Sendeantenne Tx zum Radarsensor zurückgestrahlt.

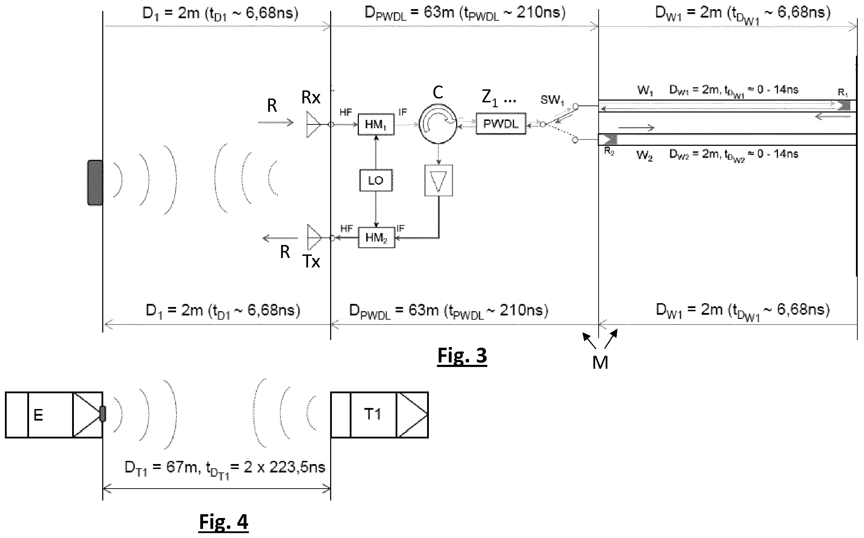

In weiterer Folge an Hand der Fig. 3 und 4 ein Beispiel mit folgenden Startvorgaben beschrieben:

Der relative Abstand $D_{T1}$ zwischen dem mit Radaremitter und Radarsensor ausgestatteten Testfahrzeug E und einem Zielobjekt, Ziel-Fahrzeug T1,
beträgt zunächst 67 m, entsprechend einer Signallaufzeit $t_{DT1}$ von 447 ns ($t_{DT1} = 2 * D_{T1} / c0 = 447$ ns, wobei c0 die Lichtgeschwindigkeit ist).

Die relative Geschwindigkeit zwischen den beiden Fahrzeugen ist zunächst v_rel = 0 km/h.

Folgendes Manöver wird simuliert:

Die beiden Fahrzeuge starten mit der gleichen Geschwindigkeit und das Testfahrzeug E reduziert den Abstand mit konstanter Relativgeschwindigkeit auf 25 m. Signallaufzeit ist dann 166,8 ns.

Beschreibung des Signallaufwegs:

Der Abstand $D_1$ zwischen Radarsensor E und der ersten Zeitverzögerungseinheit 1 beträgt 2 m ($t_{D1}$ = ca. 6,68 ns). Entsprechend der Beispielvorgaben befindet sich der Stimulator in folgendem Zustand: um den in der Simulation angegebenen Abstand simulieren zu können, sind in dem PWDL-Modul n = 15 Stück Zeitverzögerungseinheiten $Z_1$, $Z_2$, $Z_3$, ..., $Z_n$ in Serie geschaltet ($t_{PWDL}$ ~ 15 x 14 ns = 210 ns). Die Schalteinheit $SW_1$ leitet das Signal in den Wellenhohleiter $W_1$ ein. Die Reflektoren $R_1$ und $R_2$ in den Wellenhohlleitern $W_1$ und $W_2$ befinden sich an Positionen wie in Fig. 3 dargestellt, der erste Reflektor $R_1$ daher an seinem entferntesten Ende. In diesem Zustand beträgt die Signalverzögerung zwischen Ein- und Austritt im ersten Reflektor-Hohlwellenleiter $W_1$ ca. 14 ns. Bewegen sich die Reflektoren in Pfeilrichtung, wie es in Fig. 3 dargestellt ist, verringert sich der simulierte Abstand maximal um 2 m, die Länge des Hohlwellenleiters in $W_1$. Wenn der Reflektor $R_1$ das Eingangsende von $W_1$ erreicht hat, lenkt $SW_1$ das Signal auf $W_2$ um.

Gleichzeitig wird im Zeitverzögerungsmodul PWDL eine Verzögerungseinheit $Z_1$, $Z_2$, $Z_3$, ..., $Z_n$ weggeschaltet. Das bedeutet, dass die Verzögerung auf ca. 196 ns verändert wird (n = 14, $t_{PWDL}$ = ca. 14 x 14 ns = 196 ns). Weil sich der zweite Reflektor $R_2$ zu diesem Zeitpunkt am anderen Ende des mit $W_2$ markierten Wellenhohlleiters befindet, ist die Signalverzögerung gleich groß wie vor den Umschaltvorgängen von $SW_1$ und des PWDM-Moduls.

Um den simulierten Abstand weiter zu verringern, fährt der zweite Reflektor $R_2$ im Wellenhohlleiter $W_2$ zum Eingangspunkt. Wenn der zweite Reflektor $R_2$ das Eingangsende von $W_2$ erreicht hat, lenkt $SW_1$ das Signal zurück auf $W_1$ und gleichzeitig wird im PWDL-Modul eine weitere Verzögerungseinheit $Z_1$, $Z_2$, $Z_3$, ..., $Z_n$ weggeschaltet. Um den in der Vorgabe definierten Abstand von 25 m erreichen zu können, wird dieser oben beschriebene Ablauf so oft fortgesetzt, bis die entsprechende Verzögerung erreicht wird. In diesem Fall sind nur mehr n = 5 Stück Zeitverzögerungseinheiten $Z_1$, $Z_2$, $Z_3$, ..., $Z_n$ in Serie geschalten (n = 5, $t_{PWDL}$ = ca. 5 x 14 ns = 70 ns).

Die gesamte Signallaufzeit ergibt sich beim angegebenen Start- und Zielabstand wie folgt. Wenn:

$$D_{T1} = 67 \text{ m}, \; t_{\Sigma,DT1} = 2 * (t_{D1} + t_{PWDL} + t_{Dw1}) = 2 * (6{,}68 \text{ ns} + 210 \text{ ns} + 6{,}68 \text{ ns})$$
$$= 446{,}72 \text{ ns}$$

$$D_{T1} = 25 \text{ m}, \; t_{\Sigma,DT1} = 2 * (t_{D1} + t_{PWDL} + t_{Dw1}) = 2 * (6{,}68 \text{ ns} + 70 \text{ ns} + 6{,}68 \text{ ns})$$
$$= 166{,}72 \text{ ns}$$

Um den Abstand wieder zu vergrößern, müssen die Reflektoren $R_1$, $R_2$ in die entgegengesetzten Richtungen, im Vergleich zum beschriebenen Beispiel, verschoben werden und die Verzögerungseinheiten $Z_1$, $Z_2$, $Z_3$, ..., $Z_n$ zuanstatt weggeschaltet werden.

**Bezugszeichenliste**

| | |
|---|---|
| 1, 2, 3, ..., n | erster bis n-ter Hohlwellenleiter |
| R | Radarsignal |
| Rx | Empfangsantenne |
| Tx | Sendeantenne |
| M | Modulator |
| $Z_1$, $Z_2$, $Z_3$, ..., $Z_n$ | erste bis n-te Zeitverzögerungseinheit |
| $t_1$, $t_2$, $t_3$, ..., $t_n$ | erste bis n-te Zeitverzögerung |
| PWDL | Zeitverzögerungsmodul |
| $t_{PWDL}$ | Zeitverzögerung im Zeitverzögerungsmodul |
| $HM_1$ | erster Mischer |
| $HM_2$ | zweiter Mischer |

| HF | höhere Frequenz |
|---|---|
| IF | niedrigere Frequenz |
| C | Zirkulationseinheit |
| E1 | Eingang vom ersten Mischer |
| E2 | Ausgang zum zweiten Mischer |
| E3 | Ausgang zur Zeitverzögerungseinheit |
| E4 | Eingang von der Zeitverzögerungseinheit |
| $W_1$ | erster Reflektor-Hohlwellenleiter |
| $W_2$ | zweiter Reflektor-Hohlwellenleiter |
| $D_{W1}$ | Distanz am ersten Reflektor-Hohlwellenleiter |
| $D_{W2}$ | Distanz am zweiten Reflektor-Hohlwellenleiter |
| $t_{DW1}$ | Zeitverzögerung am ersten Reflektor-Hohlwellenleiter |
| $t_{DW2}$ | Zeitverzögerung am zweiten Reflektor-Hohlwellenleiter |
| $R_1$ | erster Reflektor |
| $R_2$ | zweiter Reflektor |
| $SW_1$ | Schalteinheit |
| $D_1$ | Distanz Radarsensor |
| $t_{D1}$ | Zeit vom Radarsensor |
| V | Verstärker |
| E | Testfahrzeug |
| T1 | Zielfahrzeug |
| $D_{T1}$ | Distanz zum Zielfahrzeug |
| $t_{DT1}$ | Zeit zum Zielfahrzeug |
| $SW_{D1}$ ... $SW_{Dn}$ | Schalteinheiten |

**Patentansprüche**

1. Radarsensorstimulator, zur Modulierung eines Radarsignals (R) in einem Fahrzeugprüfstand, umfassend eine Empfangsantenne (Rx) zum Empfang des Radarsignals (R), einen Modulator (M) zur Veränderung des Radarsignals (R) und eine Sendeantenne (Tx) zum Aussenden des modulierten Radarsignals (R),
**dadurch gekennzeichnet, dass** der Modulator (M) zumindest eine Zeitverzögerungseinheit ($Z_1$) umfasst, wobei die Zeitverzögerungseinheit ($Z_1$) zumindest einen Hohlwellenleiter (1) umfasst, so dass mittels des Hohlwellenleiters (1) dem Radarsignal (R) in der Zeitverzögerungseinheit ($Z_1$) eine vordefinierte Zeitverzögerung ($t_1$) aufgeprägt werden kann.

2. Radarsensorstimulator nach Anspruch 1,
**dadurch gekennzeichnet, dass** der Modulator (M) mehrere Zeitverzögerungseinheiten ($Z_1$, $Z_2$, $Z_3$, ..., $Z_n$) umfasst, bevorzugt mindestens 10, besonders bevorzugt mindestens 100 Zeitverzögerungseinheiten ($Z_1$, $Z_2$, $Z_3$, ..., $Z_n$), wobei die Zeitverzögerungseinheiten ($Z_1$, $Z_2$, $Z_3$, .. , $Z_n$) jeweils zumindest einen Hohlwellenleiter (1, 2, 3, ..., n) umfassen, so dass mittels der Hohlwellenleiter (1, 2, 3, ..., n) dem Radarsignal (R) in den Zeitverzögerungseinheiten ($Z_1$, $Z_2$, $Z_3$, ..., $Z_n$) jeweils eine vordefinierte Zeitverzögerung ($t_1$, $t_2$, $t_3$, ..., $t_n$) aufgeprägt werden kann.

3. Radarsensorstimulator nach zumindest einem der vorhergehenden Ansprüche,
**dadurch gekennzeichnet, dass** der Hohlwellenleiter (1) in der Zeitverzögerungseinheit ($Z_1$) spulenförmig ange-ordnet ist.

4. Radarsensorstimulator nach zumindest einem der vorhergehenden Ansprüche,
**dadurch gekennzeichnet, dass** der Radarsensorstimulator einen ersten Mischer ($HM_1$) zwischen der Empfangs-antenne (Rx) und der Zeitverzögerungseinheit ($Z_1$) umfasst, wobei das Radarsignal (R) durch den ersten Mischer ($HM_1$) von einer höheren Frequenz (HF) auf eine niedrigere Frequenz (IF) transformierbar ist.

5. Radarsensorstimulator nach zumindest einem der vorhergehenden Ansprüche,
**dadurch gekennzeichnet, dass** der Radarsensorstimulator einen zweiten Mischer ($HM_2$) zwischen der Zeitverzö-gerungseinheit ($Z_1$) und der Sendeantenne (Tx) umfasst, wobei das Radarsignal (R) durch den zweiten Mischer ($HM_2$) von einer niedrigeren Frequenz (IF) auf eine höhere Frequenz (HF) transformierbar ist.

6. Radarsensorstimulator nach zumindest einem der vorhergehenden Ansprüche,

**dadurch gekennzeichnet, dass** der Radarsensorstimulator eine Zirkulationseinheit (C) umfasst, wobei die Zirkulationseinheit (C) einen Eingang (E1) für das Radarsignal (R) vom ersten Mischer ($HM_1$) aufweist, einen Ausgang (E2) für das Radarsignal (R) zum zweiten Mischer ($HM_2$) aufweist und einen Ausgang (E3) und einen Eingang (E4) zur Zeitverzögerungseinheit ($Z_1$) aufweist.

7. Radarsensorstimulator nach zumindest einem der vorhergehenden Ansprüche,
**dadurch gekennzeichnet, dass** der Radarsensorstimulator zumindest einen ersten Reflektor-Hohlwellenleiter ($W_1$) umfasst, wobei das Radarsignal (R) nach der Zeitverzögerungseinheit ($Z_1$) in den ersten Reflektor-Hohlwellenleiter ($W_1$) geleitet werden kann, wobei der erste Reflektor-Hohlwellenleiter ($W_1$) zumindest einen, im Hohlwellenleiter des ersten Reflektor-Hohlwellenleiters ($W_1$) beweglichen, ersten Reflektor ($R_1$) für das Radarsignal (R) umfasst.

8. Radarsensorstimulator nach Anspruch 7,
**dadurch gekennzeichnet, dass** der Radarsensorstimulator zumindest einen zweiten Reflektor-Hohlwellenleiter ($W_2$) umfasst, wobei das Radarsignal (R) nach der Zeitverzögerungseinheit ($Z_1$) in den zweiten Reflektor-Hohlwellenleiter ($W_2$) geleitet werden kann, wobei der zweite Reflektor-Hohlwellenleiter ($W_2$) zumindest einen, im Hohlwellenleiter des zweiten Reflektor-Hohlwellenleiters ($W_2$) beweglichen, zweiten Reflektor ($R_2$) für das Radarsignal (R) umfasst.

9. Radarsensorstimulator nach Anspruch 7 und Anspruch 8,
**dadurch gekennzeichnet, dass** der Radarsensorstimulator der Zeitverzögerungseinheit ($Z_1$) nachgeschaltet eine Schalteinheit ($SW_1$) umfasst, wobei das Radarsignal (R) durch die Schalteinheit ($SW_1$) wahlweise zum ersten Reflektor-Hohlwellenleiter ($W_1$) oder zum zweiten Reflektor-Hohlwellenleiter ($W_2$) geleitet werden kann.

10. Radarsensorstimulators nach Anspruch 7 oder Anspruch 8,
**dadurch gekennzeichnet, dass** der Radarsensorstimulator eine Steuerung umfasst, wobei die Steuerung dazu eingerichtet ist, in einem Normalbetrieb bei Erreichen einer Endlage des ersten und/oder des zweiten Reflektors ($R_1$, $R_2$) die Zeitverzögerungseinheit ($Z_1$) bzw. eine der Zeitverzögerungseinheiten ($Z_1$, $Z_2$, $Z_3$, ..., $Z_n$) zu deaktivieren oder die Zeitverzögerungseinheit ($Z_1$) bzw. eine der Zeitverzögerungseinheiten ($Z_1$, $Z_2$, $Z_3$, ..., $Z_n$) zu aktivieren.

11. Radarsensorstimulators nach Anspruch 10,
**dadurch gekennzeichnet, dass** die Steuerung dazu eingerichtet ist, im Normalbetrieb den ersten Reflektor ($R_1$) und den zweite Reflektor ($R_2$) gleichzeitig in den einander gegenläufigen Richtungen zu bewegen.

**Fig. 1**

**Fig. 2**

**Fig. 3**

**Fig. 4**

Europäisches
Patentamt

European
Patent Office

Office européen
des brevets

# EUROPÄISCHER RECHERCHENBERICHT

**Nummer der Anmeldung**

EP 16 19 5243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 329 953 A (ADAMS EDWIN C ET AL) 4. Juli 1967 (1967-07-04) | 1,2,7,8 | INV. G01S7/40 |
| Y | * das ganze Dokument * | 6-11 | H01P1/28 H01P9/02 |
| X | US 3 138 797 A (STEINBERG ALFRED A) 23. Juni 1964 (1964-06-23) | 1,2 | ADD. |
| Y | * das ganze Dokument * | 6 | G01S13/93 |
| X | PLASBERG G: "SIMULATION VON RADARZIELEN", FREQUENZ, SCHIELE UND SCHON, BERLIN, DE, Bd. 45, Nr. 5 / 06, 1. Mai 1991 (1991-05-01), Seiten 110-115, XP000234619, ISSN: 0016-1136 | 1-11 | |
| Y | * Seite 110, Absatz 1 - Seite 111, Absatz 3; Abbildungen 1,2 * | 3,6-11 | |
| Y | DE 10 2007 008202 A1 (SIEMENS AG [DE]) 29. Mai 2008 (2008-05-29) * Absätze [0030], [0034]; Abbildung 2 * | 3 | |
| Y | WO 00/00842 A1 (DORNIER GMBH [DE]; FLACKE JOACHIM [DE]; KAISER BRUNO [DE]) 6. Januar 2000 (2000-01-06) * Seite 1, Zeile 6 - Seite 2, Zeile 8; Abbildung 1 * | 6 | RECHERCHIERTE SACHGEBIETE (IPC) G01S H01P |
| Y | MCGRATH W R ET AL: "A NOVEL NONCONTACTING WAVEGUIDE BACKSHORT FOR SUBMILLIMETER WAVE FREQUENCIES", INTERNATIONAL JOURNAL OF INFRARED AND MILLIMETER WAVES, SPRINGER, DORDRECHT, NL, Bd. 16, Nr. 1, 1. Januar 1995 (1995-01-01), Seiten 237-256, XP000490521, ISSN: 0195-9271, DOI: 10.1007/BF02085860 * das ganze Dokument * | 7-11 | |

Der vorliegende Recherchenbericht wurde für alle Patentansprüche erstellt

| Recherchenort | Abschlußdatum der Recherche | Prüfer |
|---|---|---|
| München | 26. April 2017 | Schmelz, Christian |

**ANHANG ZUM EUROPÄISCHEN RECHERCHENBERICHT
ÜBER DIE EUROPÄISCHE PATENTANMELDUNG NR.**

EP 16 19 5243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-04-2017

| Im Recherchenbericht angeführtes Patentdokument | Datum der Veröffentlichung | Mitglied(er) der Patentfamilie | Datum der Veröffentlichung |
|---|---|---|---|
| US 3329953 A | 04-07-1967 | GB 1141443 A<br>US 3329953 A | 29-01-1969<br>04-07-1967 |
| US 3138797 A | 23-06-1964 | KEINE | |
| DE 102007008202 A1 | 29-05-2008 | KEINE | |
| WO 0000842 A1 | 06-01-2000 | EP 1095293 A1<br>US 6496139 B1<br>WO 0000842 A1 | 02-05-2001<br>17-12-2002<br>06-01-2000 |

EPO FORM P0461

Für nähere Einzelheiten zu diesem Anhang : siehe Amtsblatt des Europäischen Patentamts, Nr.12/82